Europäisches Patentamt

European Patent Office

Office européen des brevets

(11) Numéro de publication : **0 389 310 B1**

## (12) FASCICULE DE BREVET EUROPEEN

(45) Date de publication du fascicule du brevet :
**04.11.92 Bulletin 92/45**

(51) Int. Cl.⁵ : **G01D 5/16**

(21) Numéro de dépôt : **90400425.6**

(22) Date de dépôt : **15.02.90**

(54) **Capteur potentiométrique.**

(30) Priorité : **13.03.89 FR 8903242**

(43) Date de publication de la demande :
**26.09.90 Bulletin 90/39**

(45) Mention de la délivrance du brevet :
**04.11.92 Bulletin 92/45**

(84) Etats contractants désignés :
**DE GB IT**

(56) Documents cités :
**WO-A-87/06689**
**DE-A- 2 654 238**
**FR-A- 2 090 842**
**FR-A- 2 570 177**
**US-A- 4 631 540**
**PATENT ABSTRACTS OF JAPAN, vol. 9, no. 86**
**(P-349)[1089], 16 avril 1985; & JP-A-59 216 201**
**(SONY K.K.) 06-12-1984**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Marcuzzi, Laurent**
**109, rue Anatole France**
**F-92300 Levallois-Perret (FR)**

(74) Mandataire : **Polus, Camille et al**
**c/o Cabinet Lavoix 2, Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un capteur potentiométrique perfectionné.

De tels capteurs peuvent être utilisés notamment dans l'industrie automobile et sont destinés par exemple à être montés sur une crémaillère de direction ou sur un vérin d'assistance de direction d'un véhicule.

Dans ce cas, ils doivent permettre une mesure précise et absolue du déplacement de la crémaillère donc de l'angle de braquage des roues et de la vitesse de déplacement de celle-ci.

Les capteurs utilisés actuellement pour mesurer l'angle de braquage des roues sont des capteurs rotatifs du type opto-électronique montés sur la colonne de direction.

Ces capteurs présentent un certain nombre d'inconvénients, parmi lesquels une mauvaise résolution à prix automobile. De plus, ils ne permettent pas de mesurer une position absolue, sont d'un montage difficile et sont très sensibles aux poussières et aux températures élevées.

Par ailleurs, il existe également des capteurs de déplacement linéaires susceptibles d'être montés sur crémaillère. Ces capteurs sont en général des potentiomètres linéaires présentant une très mauvaise résolution, car à prix automobile, les caractéristiques des pistes résistives ne permettent pas de travailler, lors du traitement des signaux de sortie de ces capteurs, avec plus de 7 bits (résolution de 11° au volant), des capteurs opto-électroniques linéaires qui ne permettent pas de mesure absolue et sont sensibles aux températures élevées et enfin des capteurs à transformateurs différentiels de prix très élevé et nécessitant une électronique associée complexe.

On connait également d'après le document FR-A-2 570 177, un organe de détection de position pour une partie mobile dans un véhicule automobile.

Ce capteur comporte un boîtier de capteur dans lequel sont disposées au moins deux pistes conductrices de l'électricité, associées, dont l'une présente des caractéristiques résistives et l'autre est une piste collectrice de sortie de signaux, en regard desquelles est monté déplaçable un frotteur de liaison porté par un curseur déplaçable dans le boîtier par l'intermédiaire d'une tige de manoeuvre.

Cependant, le capteur décrit dans ce document comporte un grand nombre de pistes et donc de curseurs entraînant une augmentation de l'encombrement, du prix et du poids de ce capteur, ce qui présente des problèmes d'intégration en grande série dans les véhicules automobiles.

Le document WO-A-8 706 689 décrit un capteur potentiométrique du type comportant un boîtier de capteur dans lequel sont disposées deux pistes conductrices de l'électricité, associées, dont l'une présente des caractéristiques résistives et l'autre est une piste collectrice de sortie de signaux, sur lesquelles est monté déplaçable un frotteur de liaison. Ce frotteur est porté par un curseur déplaçable dans le boîtier par l'intermédiaire d'une tige de manoeuvre. Une borne de l'alimentation en électricité de la piste présentant des caractéristiques résistives, est reliée au point milieu entre des segments de cette piste et l'autre aux extrémités de celle-ci. Dans un mode de réalisation, la piste résistive de ce capteur comporte deux segments résistifs associés à des pistes collectrices.

Cependant, la précision et la résolution de ce capteur sont limitées.

Le but de l'invention est donc de résoudre les problèmes évoqués ci-dessus en proposant un capteur potentiométrique qui soit simple, fiable et d'un prix de revient et d'un encombrement peu élevés.

A cet effet, l'invention a pour objet un capteur potentiométrique du type comportant un boîtier de capteur dans lequel sont disposées au moins deux pistes conductrices de l'électricité, associées, dont l'une présente des caractéristiques résistives et l'autre est une piste collectrice de sortie de signaux, sur lesquelles est monté déplaçable un frotteur de liaison porté par un curseur déplaçable dans le boîtier par l'intermédiaire d'une tige de manoeuvre, la piste présentant des caractéristiques résistives comportant au moins deux segments résistifs, une borne de l'alimentation en électricité de la ou chaque piste présentant des caractéristiques résistives, étant reliée au point milieu entre les segments de cette piste et l'autre aux extrémités de celle-ci, caractérisé en ce qu'il comporte deux jeux de pistes associées en regard de chacun desquels est disposé un frotteur porté par le curseur et en ce que la piste présentant des caractéristiques résistives de chaque jeu de pistes, comporte au moins deux segments résistifs distincts, décalés suivant la longueur du boîtier du capteur par rapport aux segments résistifs de la piste correspondante de l'autre jeu de pistes.

L'invention sera mieux comprise à l'aide de la description qui va suivre, donnée uniquement à titre d'exemple et faite en se référant aux dessins annexés, sur lesquels :

- la Fig.1 représente une vue schématique en coupe d'un capteur selon l'invention; et
- la Fig.2 représente des signaux obtenus aux sorties d'un capteur selon l'invention.

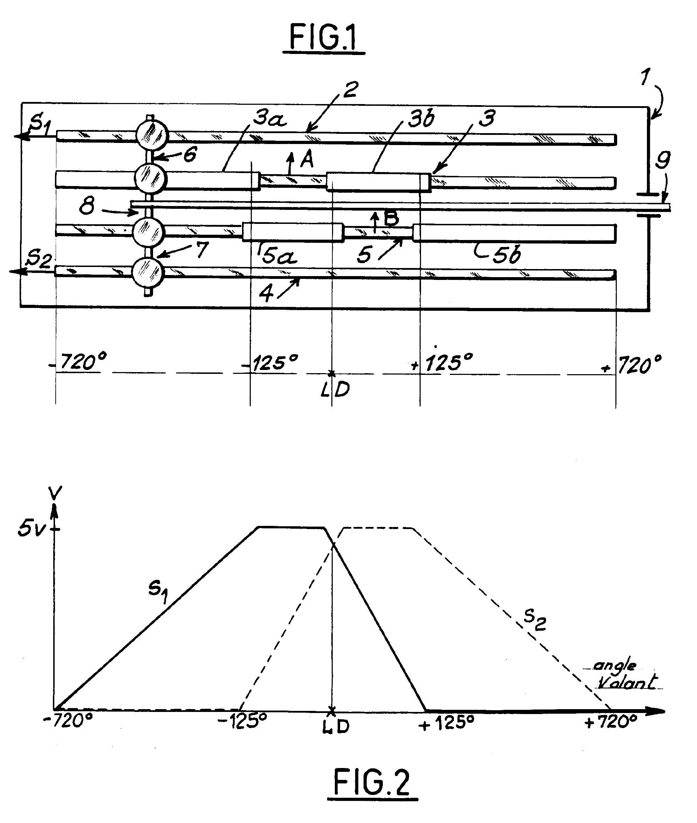

Ainsi qu'on peut le voir sur la Fig.1, un capteur potentiométrique selon l'invention, est du type comportant un boîtier de capteur 1 dans lequel sont disposées au moins deux pistes conductrices de l'électricité, associées, et référencées par exemple 2 et 3 sur cette figure.

Dans le mode de réalisation représenté, deux jeux de pistes associées sont disposés dans ce boîtier de capteur.

Le premier jeu de pistes est constitué par les pistes 2 et 3, tandis que le second jeu de pistes est constitué par les pistes 4 et 5. Ces jeux de pistes sont disposés parallèlement de part et d'autre de l'axe de symétrie du capteur .

L'une des pistes de chaque jeu, par exemple les pistes 3 et 5, présente des caractéristiques résistives qui seront décrites plus en détail par la suite, tandis que l'autre piste de chaque jeu, comme les pistes 2 et 4, est une piste collectrice de sortie de signaux, en S1 et S2 respectivement.

Un frotteur 6, 7 est disposé en regard des pistes associées de chaque jeu, de manière à relier électriquement les points des pistes associées, en regard les uns des autres. Ces frotteurs sont portés par un curseur 8 monté déplaçable suivant la longueur du boîtier de capteur 1 par l'intermédiaire d'une tige de manoeuvre 9.

Selon l'invention, chaque piste présentant des caractéristiques résistives, c'est à dire les pistes 3 et 5, présente au moins deux segments résistifs distincts référencés respectivement 3a et 3b et 5a et 5b sur cette figure.

Une borne de l'alimentation en électricité de chacune des pistes présentant des caractéristiques résistives est reliée au point milieu, respectivement A et B, entre les segments de chaque piste, tandis que l'autre borne de l'alimentation en électricité est reliée aux extrémités de la piste concernée.

Ainsi par exemple, les points A et B peuvent être reliés à une tension de + 5 V, tandis que les extrémités des pistes sont reliées au 0 V de l'alimentation.

Avantageusement également, et comme on peut le voir sur cette figure, les segments résistifs des pistes 3 et 5 sont décalés suivant la longueur du boîtier de capteur, et se chevauchent à leurs extrémités de manière à obtenir un signal de position en S1 ou en S2, sur la totalité du déplacement du curseur dans le boîtier du capteur.

L'alimentation et la disposition des segments, décrites précédemment, permettent d'obtenir une mesure de déplacement absolue.

Les segments de l'une ou de chaque piste présentent également des longueurs différentes.

Ainsi par exemple, les segments 3a et 5b sont plus longs que les segments 5a et 3b, les segments les plus longs étant disposés aux extrémités opposées des pistes, ce qui permet d'obtenir différentes résolutions du capteur dans différentes plages de rotation du volant, et plus particulièment d'améliorer cette résolution autour de la ligne droite matérialisée par la référence LD sur cette figure.

Ainsi par exemple, comme cela est illustré sur cette Fig.1, la longueur du capteur peut être découpée en trois zones, une zone s'étendant entre plus ou moins 125° de rotation du volant autour de la ligne droite référencée LD sur cette figure et dans laquelle la résolution du capteur est de 1° de rotation du volant. De part et d'autre de cette zone sont ménagées des zones de moins bonne résolution par exemple de 5° de rotation du volant.

Comme on peut le voir sur la Fig.2, qui représente les signaux de sortie S1 et S2 des pistes collectrices du capteur selon l'invention, en fonction de l'angle de rotation du volant, si on prend comme hypothèse que le volant fait quatre tours de butée à butée, on peut constater que le niveau du signal S1 en partant de la gauche, présente une première pente ascendante, correspondant au passage du frotteur 6 sur la piste collectrice 2 et le segment résistif 3a de la piste 3, jusqu'à un palier à 5 V. Ce palier correspond au passage du frotteur 6 sur la partie conductrice de la piste 3 reliant les segments résistifs 3a et 3b de celle-ci.

Lors de ce déplacement, le frotteur 7 passe également sur le segment 5a de la piste 5 et la piste 4, de sorte que le niveau du signal de sortie S2 progresse jusqu'à un palier de 5 V.

Après le passage sur la partie conductrice reliant les segments 3a et 3b de la piste 3, le frotteur 6 passe sur le segment 3b, de sorte que le niveau de la tension de sortie S1 décroit jusqu'à 0 V.

Après un palier à 5 V, le niveau du signal S2 décroit également, lors du passage du frotteur 7 sur le segment 5b de la piste 5.

On conçoit qu'il est possible de caractériser les pentes, les résolutions de même que la longueur des paliers des signaux de sortie d'un tel capteur, en ajustant les caractéristiques des segments des pistes 3 et 5.

Le capteur selon l'invention permet donc une mesure absolue de déplacement et présente une bonne résolution dans la zone autour de la ligne droite.

En dehors de cette zone, c'est à dire au-delà d'un angle de ± 125°, la résolution peut être ajustée à une valeur suffisante, par exemple de 5° de rotation du volant, car cet angle n'est atteint qu'à de très faibles vitesses.

Par ailleurs, le montage de ce capteur est simplifié par rapport à un capteur rotatif monté sur la colonne de direction comme c'était le cas dans l'état de la technique.

Le problème d'encombrement ne se pose plus au niveau de la crémaillère ou du vérin d'assistance de direction.

Enfin, il est également possible de mémoriser la position de la ligne droite, un calculateur électronique relié aux sorties S1 et S2, disposant de cette ligne droite dès le démarrage du véhicule.

**Revendications**

1. Capteur potentiométrique du type comportant un boîtier de capteur (1) dans lequel sont disposées au moins deux pistes (2,3;4,5) conductrices de l'électricité, associées, dont l'une (3;5) présente des caractéristiques résistives et l'autre (2;4) est une piste collectrice de sortie de signaux, sur lesquelles est monté déplaçable un frotteur de liaison (6;7) porté par un curseur (8) déplaçable dans le boîtier (1) par l'intermédiaire d'une tige de manoeuvre (9), la piste (3;5) présentant des caractéristiques résistives comportant au moins deux segments résistifs, une borne de l'alimentation en électricité de la ou chaque piste présentant des caractéristiques résistives, étant reliée au point milieu (A,B) entre les segments de cette piste et l'autre aux extrémités de celle-ci, caractérisé en ce qu'il comporte deux jeux de pistes associées (2,3;4,5) en regard de chacun desquels est disposé un frotteur (6;7) porté par le curseur (8) et en ce que la piste présentant des caractéristiques résistives de chaque jeu de pistes, comporte au moins deux segments résistifs distincts, décalés suivant la longueur du boîtier (1) du capteur par rapport aux segments résistifs de la piste correspondant de l'autre jeu de pistes.

2. Capteur selon la revendication 1, caractérisé en ce que les segments résistifs distincts des pistes (3;5) se chevauchent à leurs extrémités suivant la longueur du capteur.

3. Capteur selon l'une quelconque des revendications précédentes, caractérisé en ce que les segments distincts (3a,3b;5a,5b) de l'une ou de chaque piste (3,5) présentent des longueurs différentes.

4. Capteur selon la revendication 3, caractérisé en ce que les segments distincts (3a;5b) de plus grande longueur sont disposés aux extrémités opposées des pistes.

## Claims

1. A potentiometric sensor of the type comprising a sensor casing (1) wherein there are disposed at least two associated electrically conductive tracks (2 , 3; 4, 5), whereof one (3:5) has resistive characteristics and the other (2:4) is a track for collecting ouptut signals, whereon there is displaceably mounted a sliding contact (6; 7) carried by a slider (8) displaceable in the casing (1) by means of a control rod (9), the track (3; 5) having resistive characteristics including at least two resistive segments, one terminal for the electricity supply of the, or each, track having resistive characteristics being connected to the midpoint (A,B) between the segments of the track, and other to the ends of the latter, characterized in that it comprises two sets of associated tracks (2, 3; 4, 5), opposite each of which there is disposed a sliding contact (6; 7) carried by the slider (8), and in that the track having resistive characteristics of each set of tracks includes at least two separate resistive segments staggered along the length of the casing (1) of the sensor relative to the resistive segments of the corresponding track of the other set of tracks.

2. A sensor according to claim 1, characterized in that the separate resistive segments of the tracks (3, 5) overlap at their ends along the length of the sensor.

3. A sensor according to any one of the preceding claims, characterized in that the separate segments (3a, 3b; 5a, 5b) of one, or each, track (3, 5) have different lengths.

4. A sensor according to claim 3, characterized in that the separate segments (3a, 5b) of greater length are disposed at opposite ends of the tracks.

## Patentansprüche

1. Potentiometrischer Fühler mit einem Fühlergehäuse (1), in dem wenigstens zwei einander zugeordnete elektrisch leitende Bahnen (2, 3; 4, 5) angeordnet sind, deren eine (3; 5) resistive Eigenschaften besitzt und deren andere (2; 4) eine Ausgangssignalsammelbahn ist und auf denen ein Verbindungsschleifschuh (6; 7) beweglich montiert ist, der von einem Läufer (8) getragen ist, der in dem Gehäuse (1) über eine Betätigungsstange (9) bewegbar ist, wobei die Bahn (3; 5) mit resistiven Eigenschaften wenigstens zwei resistive Segmente umfaßt und ein Anschluß der elektrischen Speisung der oder jeder Bahn mit resistiven Eigenschaften mit dem Mittelpunkt (A, B) zwischen den Segmenten dieser Bahn und der andere mit deren Enden verbunden ist, dadurch gekennzeichnet, daß er zwei Sätze von einander zugeordneten Bahnen (2, 3; 4, 5) umfaßt, gegenüber deren jedem ein von einem Läufer (8) getragener Schleifschuh (6; 7) angeordnet ist, und daß die Bahn mit resistiven Eigenschaften jedes Bahnsatzes wenigstens zwei getrennte resistive Segmente umfafft, die in der Länge des Gehäuses (1) des Fühlers gegen die resistiven Segmente der entsprechenden Bahn des anderen Bahnsatzes versetzt sind.

2. Fühler nach Anspruch 1, dadurch gekennzeichnet, daß die getrennten resistiven Segmente der Bahnen (3; 5) sich an ihren Enden in der Länge des Fühlers überlappen.

3. Fühler nach einem der vorhergehenden Ansprüche, dadurch gekennzeichnet, daß die getrennten Segmente (3a, 3b; 5a, 5b) einer oder jeder Bahn (3, 5) verschiedene Längen haben.

4. Fühler nach Anspruch 3, dadurch gekennzeichnet, daß die getrennten Segmente (3a; 5b) größerer Länge an den einander entgegengesetzten Enden der Bahnen angeordnet sind.

## FIG.1

## FIG.2